# EUROPEAN PATENT APPLICATION

(11) **EP 4 726 590 A1**
(43) Date of publication of application: **15.04.2026**
(21) Application number: 24205940.0
(22) Date of filing: 10.10.2024
(51) Int. Cl.: G06F 21/62, G06N 3/0475

(54) **REPLACING FEATURES**

(71) Applicant: Koninklijke Philips N.V., 5656 AG Eindhoven (NL)
(72) Inventor: VAN DEN DUNGEN, Wilhelmus Andreas Marinus Arnoldus Maria, Eindhoven (NL); VAN ACHT, Victor Martinus Gerardus, Eindhoven (NL); GARCIA MORCHON, Oscar, Eindhoven (NL)
(74) Representative: Philips Intellectual Property & Standards

(57) **Abstract**

Proposed concepts thus aim to provide schemes, solutions, concept, designs, methods and systems pertaining to replacing features of a data signal. In particular, embodiments aim to provide a method for replacing features of a data signal by processing second features of a data signal in order to determine replacement features, and then generating a synthetic data signal which includes a public portion comprising said replacement features as well as first features of the data signal. The synthetic data signal further comprises a hidden portion transparently embedded within the synthetic data signal which includes reconstruction data based on the second features such that reconstruction of the original full data signal can be facilitated from the synthetic data signal.

## Description

### FIELD OF THE INVENTION

This invention relates to the field of replacing features of a data signal.

### BACKGROUND OF THE INVENTION

Online communication and the sharing of content including lots of data is becoming ever more common and important. For example, in an online video call, not only what you say is shared but also your emotional state, your vital signs, the environment, etc. All this data can be harvested and used for various purposes.

During online communications, users thus often share more privacy-sensitive data than is strictly needed for the intended purpose of the communication. This information can then be used for potentially unacceptable purposes such as social scoring, biometric identification and/or categorization of users, for example.

### SUMMARY OF THE INVENTION

The invention is defined by the claims.

According to examples in accordance with an aspect of the invention, there is provided a computer-implemented method for replacing features of a data signal.

The method comprises: determining first features and second features of a data signal; processing the data signal to determine replacement features based on the second features, wherein the replacement features are different to the second features; and processing the data signal to generate a synthetic data signal comprising a public portion and a hidden portion; wherein the public portion comprises the first features and the replacement features; and the hidden portion comprises reconstruction data based on the second features, wherein the hidden portion is transparently embedded within the synthetic data signal.

Proposed concepts thus aim to provide schemes, solutions, concepts, designs, methods and systems pertaining to replacing features of a data signal. In particular, embodiments aim to provide a method for replacing features of a data signal by processing second features of a data signal in order to determine replacement features, and then generating a synthetic data signal which includes a public portion comprising said replacement features as well as first features of the data signal. The synthetic data signal further comprises a hidden portion transparently embedded within the synthetic data signal which includes reconstruction data based on the second features such that reconstruction of the original full data signal can be facilitated from the synthetic data signal.

In other words, it is proposed that after generating replacement features for a certain subset of features of a data signal, reconstruction data allowing reconstruction of said subset of features (on which the replacement features were based) can be included in a hidden portion of a synthetic data signal which is transparently embedded in the synthetic data signal. The synthetic data signal also includes a public portion comprising the replacement features and the rest of the original features of the data signal and so is still suited for the intended purpose of the original data signal (e.g., if the original data signal was a human voice command, the public portion of the synthetic data signal will still be a suitable human voice command). In this way, in a single synthetic data signal, there is essentially provided a modified data signal (i.e., including the replacement features) and data allowing reconstruction of the original data signal.

In this way, for example, the original data can be preserved while still being able to replace non-essential features for third parties, and while only having one version of the data existing (i.e., only one synthetic data signal needs to be transmitted, stored, processed, etc). Further, there will when be no need to keep traceable relation information between different versions of the data.

Also provided is a corresponding method for reconstructing a data signal from a synthetic data signal (e.g., generated according to the method described above). In other words, the synthetic data signal which includes replacement features for replacing non-essential features also includes reconstruction data to allow for reconstruction of the original data signal.

Ultimately, an improved method for replacing features of a data signal is provided.

In some embodiments, the hidden portion may be transparently embedded in the synthetic data signal using steganography. Steganography provides an effective and data-efficient way of transparently embedding a hidden portion within a synthetic data signal.

In some embodiments, the second features may comprise features corresponding to at least one of a subject's: background environment; emotional state; vital signs; health; personal information; and location. These are all particularly useful features to replace as they relate to potentially sensitive data and are rarely relevant for the purpose of online communication or smart assistants, for example. In addition, health/medical data have strict requirements on what data can be shared, and therefore this data must be fully traceable.

In some embodiments, processing the data signal to generate a synthetic data signal may comprise processing the data signal with a forward generator of a generative network. This provides a particularly effective method of generating a synthetic data signal, as well as facilitating more effective reconstruction of the second features by, for example, using the reconstruction data.

In some embodiments, the method may further comprise processing the synthetic data signal with a backward generator of the generative network to reconstruct the data signal. This may thus allow the original data signal to be reconstructed (e.g., for testing) by using the reconstruction data transparently embedded in the synthetic data signal without requiring any additional data or a separate data signal.

In some embodiments, the data signal may be encrypted prior to being processed. This may enhance the security of the data within the synthetic data signal.

In some embodiments, the encrypted data signal may be structured in a first domain prior to being processed. This has been found to increase the performance of the generating of the synthetic data signal from encrypted input as well as facilitating the replacement of any inline encryption and error correction methods.

In some embodiments, the method may further comprise: receiving first user input; and wherein determining at least one of the first and second features is based on the received first user input. This may allow a user to influence which features of the data signal are replaced / not-replaced accordingly.

In some embodiments, the data signal may comprise at least one of: a video signal; an audio signal; and a medical signal. These are all data signals which are likely to include sensitive and not-essential information (for the purpose of the data signal), and thus for which the present invention is particularly beneficial.

In some embodiments, the public portion may further comprise marking data comprising an indicator. In this way, an indicator is provided that can be used to indicate, for example, that at least some of the data within the public portion is not real / has been changed in some way (i.e., by including the replacement features).

In some embodiments, the method may further comprise: receiving second user input; and wherein determining replacement features is further based on the received second user input. This may allow a user to influence what the second features are replaced with, for example.

In some embodiments, determining the first features may comprise identifying at least one feature of the data signal meeting at least one predetermined requirement. This may facilitate, for example, automatic identification of the first (essential) features.

According to another aspect of the invention, there is provided a computer-implemented method for reconstructing a data signal from a synthetic data signal, wherein the synthetic data signal comprises a public portion and a hidden portion, wherein the public portion comprises first features of the data signal and replacement features based on second features of the data signal but different to the second features, and wherein the hidden portion is transparently embedded within the synthetic data signal and comprises reconstruction data based on the second features, the method comprising: extracting the reconstruction data from the synthetic data signal; and processing the synthetic data signal to reconstruct the data signal based on the reconstruction data.

In some embodiments, processing the synthetic data signal may comprise processing the synthetic data signal with a backward generator of a generative network. This provides an effective and efficient way of processing the synthetic data signal in order to reconstruct the data signal. For example, the weights of the backward generator can be used in combination with the reconstruction data to facilitate the reconstruction of the original features upon which the replacement features were based, and thus allow for reconstruction of the original data signal.

According to another aspect of the invention, there is provided a computer program comprising code means for implementing the method of any herein disclosed method when said program is run on a processing system.

According to another aspect of the invention, there is provided a system for replacing features of a data signal. The system comprising a processor configured to: determine first features and second features of a data signal; process the data signal to determine replacement features based on the second features, wherein the replacement features are different to the second features; and process the data signal to generate a synthetic data signal comprising a public portion and a hidden portion; wherein the public portion comprises the first features and the replacement features; and the hidden portion comprises reconstruction data based on the second features, wherein the hidden portion is transparently embedded within the synthetic data signal.

Thus, there may be proposed concepts for replacing features of a data signal in a synthetic data signal, and this may be done while providing reconstruction data within a hidden portion of said synthetic data signal (comprising said replacement features), thus facilitating reconstruction of the original features upon which the replacement features were based.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a flow diagram of a method for replacing features of a data signal according to a proposed embodiment;
Fig. 2 is a flow diagram of a method for replacing features of a data signal according to another proposed embodiment;
Fig. 3 is a flow diagram of a method for reconstructing a data signal from a synthetic data signal according to a proposed embodiment;
Fig. 4 is a simplified block diagram of a system for replacing features of a data signal according to a proposed embodiment; and
Fig. 5 illustrates an example of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Implementations in accordance with the present disclosure relate to various techniques, methods, schemes and/or solutions pertaining to replacing features of a data signal. According to proposed concepts, a number of possible solutions may be implemented separately or jointly. That is, although these possible solutions may be described below separately, two or more of these possible solutions may be implemented in one combination or another.

Embodiments of the invention aim to provide a method for replacing features of a data signal. This can be achieved by processing second features of a data signal in order to determine replacement features, and then generating a synthetic data signal which includes a public portion comprising said replacement features as well as first features of the data signal. The synthetic data signal further comprises a hidden portion transparently embedded within the synthetic data signal which includes reconstruction data based on the second features such that reconstruction of the original full data signal can be facilitated from the synthetic data signal.

In other words, it is proposed that after generating replacement features for a certain subset of features of a data signal, reconstruction data allowing reconstruction of said subset of features (on which the replacement features were based) can be included in a hidden portion of a synthetic data signal which is transparently embedded in the synthetic data signal. The synthetic data signal also includes a public portion comprising the replacement features and the rest of the original features of the data signal, such that, for example, an intended recipient of the data signal will not realise that the received synthetic data signal is, in fact, synthetic (and has had some features replaced). In this way, in a single synthetic data signal, there is essentially provided a modified data signal (i.e., including the replacement features) and data allowing reconstruction of the original data signal.

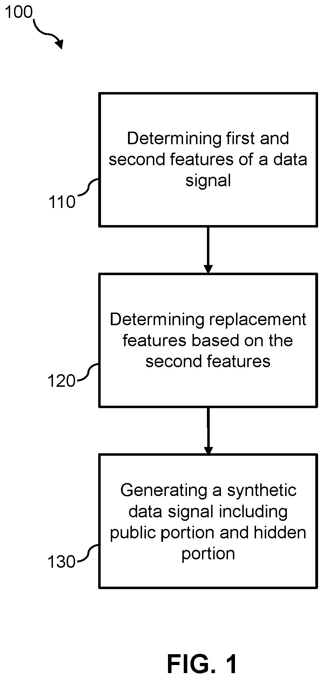

Referring now to Fig. 1, there is depicted a simplified flow diagram of a method 100 for replacing features of a data signal according to a proposed embodiment.

The method 100 begins with the step 110 of determining first features and second features of a data signal. In other words, the data signal comprises a plurality of features and step 110 comprises sorting the plurality of features into first features and second features, wherein the first and second features are mutually exclusive, and each of the plurality of features is determined as a first or second feature. For example, the first features can be understood as essential features (for the intended purpose of the data signal) and/or non-sensitive information and the second features can be understood as features to-be-replaced and/or non-essential sensitive information.

For example, in this embodiment, the second features comprise features corresponding to at least one of a subject's: background environment; emotional state; vital signs; health; personal information; and location. These are all particularly useful features to replace as they relate to potentially sensitive data and are rarely relevant for the purpose of online communication, for example. Of course, in other embodiments, the second features can comprise any other suitable non-essential (for the intended purpose of the data signal) features, as the skilled person would understand.

To be clear, vital signs may comprise, for example, at least one of: heart rate; respiration rate; blood pressure; body temperature; oxygen saturation; and BMI. A subject's health may comprise broader physiological parameters than specifically vital signs, such as, for example, body fate percentage, waist-to-hip ratio, blood glucose level, cholesterol levels, vitamin levels, etc. Personal information may comprise, for example, at least one of: handwriting style; face; voice; fingerprint(s); gait; iris pattern; signature; body language; writing style; vein patterns; and posture. Of course, as would be apparent to the skilled person, in other embodiments, personal information can comprise any suitable information.

In some embodiments, determining the first features may comprise identifying at least one feature of the data signal meeting at least one predetermined requirement. This may facilitate, for example, automatic identification of the first (essential) features. For example, depending on the type/purpose of the data signal, there may be a corresponding predetermined requirement(s) defining what category/type of features should be determined as first features (i.e., what category/type of features are essential for the intended purpose of the data signal, i.e., essential for the purpose of a third party intending to process the data signal). For example, if the data signal is an audio signal intended for an AI voice assistant, the predetermined requirement may comprise the spoken words (i.e., without any emotion), such that the first features comprise the bare spoken words needed for the AI voice assistant to function. In another example, if the data signal is a video signal intended for facial authentication, the predetermined requirement may comprise the user's face, such that the facial authentication can properly function. For example, the at least one predetermined requirement may take the form of a list of requirements, a flowchart of requirements, a machine-learning model trained to identify first features, or any other suitable form, as the skilled person would understand.

In this embodiment, the data signal comprises at least one of: a video signal; an audio signal; and a medical signal. These are all data signals which are likely to include sensitive and not-essential information (for the purpose of the data signal), and thus for which the present invention is particularly beneficial, though as the skilled person would understand, in other embodiments, the data signal can comprise any type of data signal which might include non-essential sensitive data.

Step 120 comprises processing the data signal to determine replacement features based on the second features, wherein the replacement features are different to the second features. In other words, the replacement features are based on the second features but different to them (e.g., in the same category or of the same type (e.g., a background, an emotion, a handwriting style, a face) but different to the second features such that the synthetic data signal is still coherent but does not reveal the specifics of the non-essential second features). It should be noted that the replacement features are determined to be 'real-like', i.e., such that a third-party would not be able to readily tell that they are not real and have, in fact, been synthetically generated.

Step 130 comprises processing the data signal to generate a synthetic data signal comprising a public portion and a hidden portion, wherein the public portion comprises the first features and the replacement features, and the hidden portion comprises reconstruction data based on the second features. A synthetic data signal is artificially generated information designed to mimic real-world data patterns (e.g., including replacement features based on the second features). The public portion is a portion of the synthetic data signal immediately available (e.g., visible/audible) to a user / third party. The hidden portion is hidden by being transparently embedded within the synthetic data signal. When data is hidden by being transparently embedded in a data signal, it means that additional information is subtly incorporated into an existing signal in a way that's imperceptible to casual/immediate observation but can be extracted with the right techniques. This process allows secret data to essentially "hide in plain sight" within seemingly ordinary data streams.

The reconstruction data is based on the second features such that with the right technique (e.g., using the right algorithm/network, such as a backward pass of the generative network used to generate the replacement features), the second features can be reconstructed by processing the reconstruction data. In this way, the entire original data signal can be reconstructed, obtaining the first features from the public portion and the second features from the reconstruction data hidden in the hidden portion.

In some embodiments, the reconstruction data may be the original second features themselves (or the entire original data, i.e., first and second features, though of course this would be less efficient due to the first features being duplicated). This, of course, would allow for the easiest reconstruction of the original data but would not be as secure as other less direct forms of reconstruction data.

In some embodiments, steps 120 and 130 may be performed simultaneously and/or by the same generative network such that, for example, a data signal with determined first and second features is input into a single generative network which simultaneously (or in sequence) performs steps 120 and 130. It should also be noted that in some embodiments, the method may further comprise the step of processing the data signal to generate the reconstruction data based on the second features - again this step may be performed simultaneously and/or by the same generative network as steps 120 and 130.

In this embodiment, the hidden portion is, in fact, transparently embedded in the synthetic data signal using steganography. Steganography provides an effective and data-efficient way of transparently embedding a hidden portion within a synthetic data signal. Steganography can be understood as a technique of hiding a portion of data in a data signal in such a way that it does not noticeably alter the carrier signal. For example, data can be hidden in an image by slightly altering pixel values in a predetermined way (e.g., according to a specific algorithm such that, with the right knowledge, the hidden data can be extracted). In another example, data can be hidden in an audio signal by modifying certain frequency components (e.g., according to a specific algorithm).

It should be noted that in some embodiments, the generative network is specifically trained to replace specific types/categories of features (i.e., the second features) with replacement features and this cannot be changed, whereas in other embodiments, the generative network can be more flexible and a user is able to specify which features they want replaced.

In some embodiments, the public portion may further comprise marking data comprising an indicator. In this way, an indicator is provided that can be used to indicate, for example, that at least some of the data within the public portion is not real / has been changed in some way (i.e., by including the replacement features). For example, the marking data may comprise a predetermined indicator which is known to indicate that at least some of the data in the data signal is synthetic In some embodiments, marking data can be added to the data signal before it is processed by a forward generator of a generative network, and therefore can only be reconstructed using a backward pass (essentially hiding it so that it is not readily visible in the synthetic data signal). To be clear, in all embodiments, the marking data is not added to the synthetic data signal using a generator but instead is added as a pre-processing step. In other embodiments, the indicator may be to indicate real (non-synthetic) data, and thus may be applied to the first features in the public portion; there may also be second marking data in the hidden portion comprising an indicator to indicate that the reconstruction data was derived from real data. For example, the indicator may comprise at least one of: a metadata tag; a digital watermark; a cryptographic signature; and a data perturbation.

In other embodiments, the marking data may instead be in the hidden portion, such that only parties with the knowledge required to extract data from the hidden portion can extract the marking data and learn whether (and potentially what) data in the synthetic data signal is synthetic or not.

In other words, there is essentially provided an additional method of securely marking processed data such that traceability of synthetic data is more effectively facilitated. For example, as more and more processing functions become available and used, traceability will become more and more of a challenge, and it will be harder to identify real original data vs processed enhanced data or even entirely synthetic (fake) data. Marking the data using some form of indicator can thus be used to enhance traceability of the real and/or synthetic data. As would be understood by the skilled person, in some embodiments, the marking data can also be encrypted, hidden, and/or have error-correction information added to it, etc., along with the data it is marking.

In some embodiments, the method 100 can thus further comprise a step of generating the marking data (prior to step 130), such that it can be included in the synthetic data signal during its generation (i.e., during step 130). The marking data can thus be separately generated before the step of processing the data signal to generate the synthetic data signal.

In some embodiments, the method 100 can comprise an additional step of processing the synthetic data signal to check that none of the second features are present in the public portion (and/or that the replacement features are present in the public portion).This step can be of particular benefit, for example, during training of a generative network which may be used in some embodiments for processing the data signal (i.e., in order to train it to effectively replace second features with replacement features).

In summary, a main element of the invention can be understood as a method to generate, from original data (which may be encrypted and further optionally structured (e.g., into a first domain such as a QR code), a new synthetic variant of the data, holding all the needed information for the original purpose of the original data but with specific feature(s) replaced. Furthermore, embedded in the newly generated synthetic variant, the original data can be transparently embedded (or at least reconstruction data which allows reconstruction of the original data can be transparently embedded). From this synthetic variant then, it is possible to extract the original data, for example, with the correct generative network (e.g., AI) encoder.

As would be apparent to the skilled person, there are many use cases for this invention, such as, for example: audio/video conversation (e.g., job interview, NLP dialog chatbots); voice assistants; dialog service, such as a chatbot; real-time communication (e.g., a video call); video dubbing; automatic translation; remote medical/dental advice/diagnosis (e.g., sharing images or on a video call; sharing specific dental information without sharing full dental record (e.g., manufacturer A could have a system connected to an IoT ecosystem that can clean interdental spaces, manufacturer B could have a toothbrush with intra oral scanning capabilities connected to the IoT ecosystem (able to detect interdental problems / cleaning areas), and the user could choose what information they want to share or not; electric meter data (changing the distribution of the data while keeping the overall electric used the same); IP camera data; motion sensor data; and heart rate display tracking data.

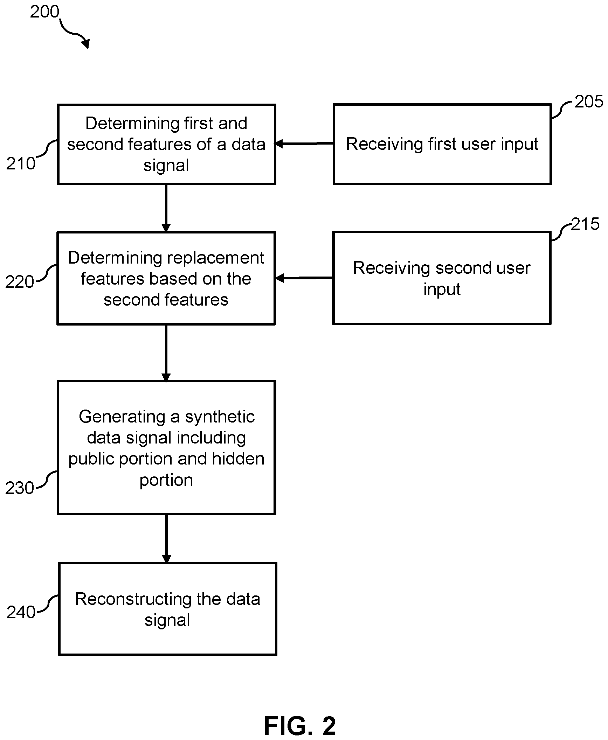

Referring now to Fig. 2, there is depicted a flow diagram of a method 200 for replacing features of a data signal according to another proposed embodiment.

Step 205 comprises receiving first user input, for example, via a user interface. Step 210 then comprises determining first features and second features of a data signal based on the received first user input. This thus allows a user to influence which features of the data signal are replaced / not-replaced accordingly. For example, the first user input may comprise an indication that the user wants all faces in the data signal replaced and/or wants all background information replaced and/or does not want their location replaced (i.e., indicates that their location is essential to include). User input may be manually performed or may be automatically performed (for example, following preferences previously set by a user).

Step 215 comprises receiving second user input. Step 220 comprises processing the data signal to determine replacement features based on the second features and the received user input, wherein the replacement features are different to the second features. This thus allows a user to influence what the second features are replaced with, for example, specifying a replacement emotion, a replacement background, a replacement face, etc.

Step 230 comprises processing the data signal with a forward generator of a generative network to generate a synthetic data signal comprising a public portion and a hidden portion, wherein the public portion comprises the first features and the replacement features, and the hidden portion comprises reconstruction data based on the second features, wherein the hidden portion is transparently embedded within the synthetic data signal. This provides a particularly effective method of generating a synthetic data signal, as well as facilitating more effective reconstruction of the second features by, for example, using the reconstruction data. For example, a generative network may comprise a generative adversarial network or an autoencoder.

In some embodiments, step 220 may also comprise processing the data signal with the same forward generator of the generative network to determine the replacement features. For example, the forward generator of the generative network may have been specifically trained for replacing second features of the data signal with replacement features for the output synthetic data signal, thus enhancing the effectiveness and/or efficiency of the method.

In some embodiments, the data signal can be encrypted prior to being processed (i.e., prior to step 220 and/or step 230). This can enhance the security of the data within the synthetic data signal. The exact encryption method is not critical, and the many ways in which this could be done would be apparent to the skilled person. It should be noted that encrypted data resembles random noise / latent code which are input into generative networks. During a corresponding decrypting step (not shown but may form part of step 240), a check can be performed such that it is determined whether the decrypted reconstructed data signal is of the same type as the synthetic data signal.

In some embodiments where the data signal has been encrypted, the encrypted data signal is also structured in a first domain prior to being processed. This has been found to increase the performance of the generative network as well as facilitating the replacement of any inline encryption and error correction methods. For example, the encrypted data signal (which resembles random noise) can be converted into structured data, i.e., can be structured in a first domain. For example, the encrypted data signal can be structured into a QR code - in this case, the first domain would be the visual, spatial domain of the QR code. Of course, as the skilled person would appreciate, in other embodiments, the encrypted data signal can be structured in any suitable way. In other words, by encrypting and structuring the data signal upfront (i.e., not as part of the processing by the generative network), the performance of the generative network can be improved. Furthermore, in some embodiments, error-correction information can also be added to the encrypted data signal as this also improves the performance of the generative network and helps to ensure that the reconstructed features (reconstructed from the reconstruction data) will match the original second features.

Step 240 comprises processing the synthetic data signal with a backward generator of the generative network to reconstruct the data signal. This thus allows the original data signal to be reconstructed (e.g., for testing, or at a later time, reconstructing the original data signal for any purpose) by using the reconstruction data transparently embedded in the synthetic data signal without requiring any additional data or a separate data signal. For example, the backward generator can be a backward pass of the generator of the generative network, or if the generative network comprises an autoencoder, the backward generator can comprise an encoder of the generative network (and the forward generator would thus comprise the generator of the generative network).

For example, the weights of the backward generator, when combined with the reconstruction data, thus facilitate effective reconstruction of the second features from the reconstruction data. In other words, the weights of the backward generator can essentially contain data which, in combination with the reconstruction data, facilitate the reconstruction of the second features. This will be the case naturally if the backward generator is of the same generative network as the forward generator which was used to generate the synthetic data signal in the first place. Alternatively, for example, the weights can be copied to a new backward generator (after, for example, being sent to an authorized party (separately to the synthetic data signal) and/or manually adjusted for this specific purpose.

In some embodiments, the weights of the backward generator can be combined/utilized with the forward pass weights to further increase the accuracy of the reconstruction as the replacement and second features are similar / of the same type, and thus the generators' features will also be similar, to an extent.

In some embodiments, step 240 may comprise an initial step of extracting the reconstruction data from the synthetic data signal.

In other words, in a specific example of the invention, there is provided: an AI generative adversarial network (GAN), for example, trained to generate an output image based on random input pixels combined with a command prompt. If the random input pixels are different, for the same command prompt, the network will generate a different output image. For example, the command prompt may be an input defining, for example, features of the data signal, an original signal shape, similar signal types, etc. In addition, the GAN can be trained to generate (replace) specific features in the data based on a specific input trigger/selector. A corresponding AI network can also be trained to recover the same random input pixels from the generated output image. Therefore, with such a network, the random input pixels that were used to generate the output image can be reconstructed along with the command prompt. For example, as would be apparent to the skilled person, error correction code can be utilized to enhance the accuracy of this reconstruction. Furthermore, data can be hidden within the generated data stream (e.g., the generated output image), such as the random input pixels. These random input pixels can then be recovered using a backwards pass of the AI network used to generate the output image. To enhance the security of the hidden information, it can first be encrypted with a secret key (and then potentially structured, e.g., in to a QR code) before being hidden in the generated data stream. Error correction code may then be added after the encryption but before being hidden. During decoding then, the hidden data can be extracted, then error correction may be performed, then the hidden data can be decrypted using the secret key.

In another specific example of the invention, original input data (i.e., a data signal) is considered latent (noise seed) space for a GAN network which has been trained to replace listed features (e.g., privacy sensitive features) and to ensure that main features needed for the core function of the input data are unchanged. For example, the input data may be a vocal text communication with a shop's natural learning processor dialog manager for the purpose of discussing a refund. For example, the GAN can be a CNN-based GAN network, and training can be done by comparing original input data to a corresponding generated synthetic version (e.g., by using a Siamese neural network, SNN or SCNN) trained for data comparison (e.g., image/audio comparison). Alternatively, a discriminator construction could be used to treat the synthetic data as the encoded reconstruction and feed it to the discriminator trained to detect synthetic data.

In addition to comparing the synthetic data with the input data, a test can also be used to verify if the non-essential features have been replaced (e.g., with a selected variant). For example, the test can be performed by an algorithm trained to detect features such as emotion, heart rate, respiration rate, etc. Another test may also be implemented in training to check if third party functionality is still working correctly with the synthetic version of the data.

Bidirectional functionality is also provided. For example, the original features on which the replacement features were based are not lost but are hidden (using steganography) in the synthetic output data and can be retrieved via, for example, an encoder (of the GAN used to generate the synthetic date). In other words, the GAN used can be a bi-directional GAN (a BiGAN). There is thus provided a single data version including both the original data (or at least data facilitating reconstruction of the original data) and an altered version (including replacement features) for third party functions. In this case, during training for example, the discriminator can also be provided with a reconstructed version of the input data to test whether it matches the original input data.

In another specific example of the invention, compared to the example described directly above, encryption can be added into the workflow to protect against reverse engineering and, for example, AI algorithms reconstructing the original input data and thus obtaining the privacy sensitive data. For example, the reconstruction data can be encrypted before being transparently embedded in the synthetic data signal. In addition, a form of soft iterative error correction can be implemented such that after decryption of the reconstruction data, a true/false test can be performed on the decrypted reconstruction data to see if it matches the original reconstruction data. Only if there is an 100% match will the original input data be reconstructed whereas if one bit is different then the decryption will fail and random data can be generated as the reconstructed image, thus ensuring the security of the privacy sensitive data.

In some embodiments, the public portion of the synthetic data signal can also be encrypted, and in some embodiments, error correction code can be added to this encrypted data to facilitate more reliable decryption.

In a further specific example of the invention, a feature (replacement) selector can also be used such that the generative network is trained in such a way that a user can have control over the new synthetic replacement features in the synthetic data. For example, a user can have full control over the type or class of feature which is replaced and shared in the public portion of the synthetic data. For example, it can be selected that only the emotion of a subject in the input data is replaced, e.g., from angry to happy.

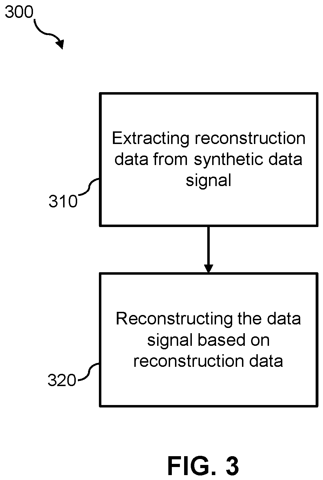

Referring now to Fig. 3, there is depicted a method 300 for reconstructing a data signal from a synthetic data signal, wherein the synthetic data signal comprises a public portion and a hidden portion, wherein the public portion comprises first features of the data signal and replacement features based on second features of the data signal but different to the second features, and wherein the hidden portion is transparently embedded within the synthetic data signal and comprises reconstruction data based on the second features.

Step 310 comprises extracting the reconstruction data from the (hidden portion of the) synthetic data signal. For example, how the reconstruction data was transparently embedded (e.g., using steganography) in the synthetic data signal needs to be known in order to successfully and efficiently extract the reconstruction data.

Step 320 comprises processing the synthetic data signal to reconstruct the data signal based on the reconstruction data. The skilled person would be aware of the many ways in which this could be performed dependent on the form of the reconstruction data. For example, if the reconstruction data comprises the second features, then reconstructing the data signal comprises replacing the replacement features in the synthetic data signal with the original second features. In this embodiment, however, the reconstruction data does not comprise the second features, and processing the synthetic data signal comprises processing the synthetic data signal with a backward generator of a generative network (for example, the same generative network which was used to generate the synthetic data signal from the original data signal). This provides an effective and efficient way of processing the synthetic data signal in order to reconstruct the data signal. In other words, the weights of the backward generator can be used in combination with the reconstruction data to facilitate the reconstruction of the original features (i.e., the second features) upon which the replacement features were based, and thus allow for reconstruction of the original data signal. For example, the generative network may comprise a bidirectional generative adversarial network and the backward generator may thus comprise an encoder.

In some embodiments, the synthetic data signal comprises marking data (comprising an indicator), e.g., in the public portion to indicate that the public portion includes at least some synthetic data.

In some embodiments, the reconstructed data signal, generated in step 320, may be an encrypted reconstructed data signal (and also potentially structured as has been described above), and therefore the method 300 may comprise an additional step of decrypting the encrypted reconstructed data signal accordingly.

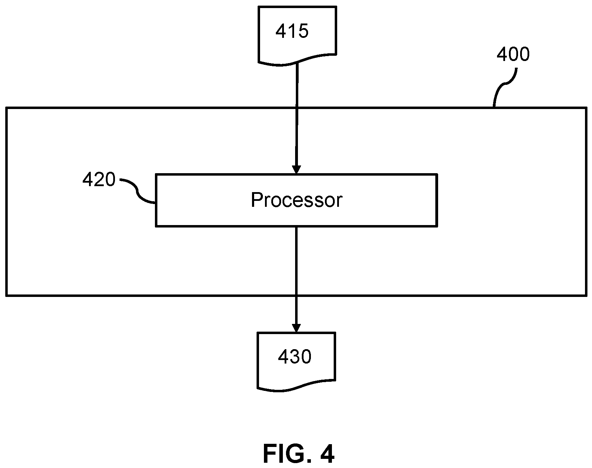

Referring now to Fig. 4, there is depicted a system 400 for replacing features of a data signal according to a proposed embodiment. The system 400 comprises inputs 415, a processor 420, and outputs 430.

The input 415 comprises a data signal. The processor 420 is configured to perform the method of any herein-disclosed embodiment (e.g., such as method 100 or 200). For example, the processor 420 is configured to: determine first features and second features of a data signal; process the data signal to determine replacement features based on the second features, wherein the replacement features are different to the second features; and process the data signal to generate a synthetic data signal comprising a public portion and a hidden portion;
wherein the public portion comprises the first features and the replacement features; and the hidden portion comprises reconstruction data based on the second features, wherein the hidden portion is transparently embedded within the synthetic data signal. The output 430 thus comprises the synthetic data signal.

In another embodiment, the system 400 can be for reconstructing a data signal from a synthetic data signal, wherein the synthetic data signal comprises a public portion and a hidden portion, wherein the public portion comprises first features of the data signal and replacement features based on second features of the data signal but different to the second features, and wherein the hidden portion is transparently embedded within the synthetic data signal and comprises reconstruction data based on the second features. The input 415 would thus be a synthetic data signal, the processor would be configured to perform any herein-disclosed method for reconstructing a data signal from a synthetic data signal (e.g., such as method 300) and the output 430 would comprise a reconstructed data signal.

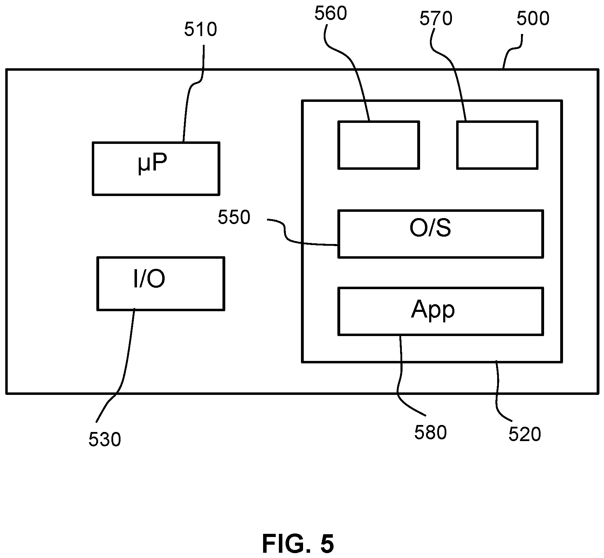

Fig. 5 illustrates an example of a computer 500 within which one or more parts of an embodiment may be employed. Various operations discussed above may utilize the capabilities of the computer 500. In this regard, it is to be understood that system functional blocks can run on a single computer or may be distributed over several computers and locations (e.g. connected via internet).

The computer 500 includes, but is not limited to, PCs, workstations, laptops, PDAs, palm devices, servers, storages, and the like. Generally, in terms of hardware architecture, the computer 500 may include one or more processors 510, memory 520 and one or more I/O devices 530 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 510 is a hardware device for executing software that can be stored in the memory 520. The processor 510 can be virtually any custom made or commercially available processor, a central processing unit (CPU), a digital signal processor (DSP), or an auxiliary processor among several processors associated with the computer 500, and the processor 510 may be a semiconductor based microprocessor (in the form of a microchip) or a microprocessor.

The memory 520 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 520 may incorporate electronic, magnetic, optical, and/or other types of storage media. Note that the memory 520 can have a distributed architecture, where various components are situated remote from one another, but can be accessed by the processor 510.

The software in the memory 520 may include one or more separate programs, each of which comprises an ordered listing of executable instructions for implementing logical functions. The software in the memory 520 includes a suitable operating system (O/S) 550, compiler 560, source code 570, and one or more applications 580 in accordance with exemplary embodiments. As illustrated, the application 580 comprises numerous functional components for implementing the features and operations of the exemplary embodiments. The application 580 of the computer 500 may represent various applications, computational units, logic, functional units, processes, operations, virtual entities, and/or modules in accordance with exemplary embodiments, but the application 580 is not meant to be a limitation.

The operating system 550 controls the execution of other computer programs, and provides scheduling, input-output control, file and data management, memory management, and communication control and related services. It is contemplated by the inventors that the application 580 for implementing exemplary embodiments may be applicable on all commercially available operating systems.

Application 580 may be a source program, executable program (object code), script, or any other entity comprising a set of instructions to be performed. When a source program, then the program is usually translated via a compiler (such as the compiler 560), assembler, interpreter, or the like, which may or may not be included within the memory 520, so as to operate properly in connection with the O/S 550. Furthermore, the application 580 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 530 may include input devices such as, for example but not limited to, a mouse, keyboard, scanner, microphone, camera, etc. Furthermore, the I/O devices 530 may also include output devices, for example but not limited to a printer, display, etc. Finally, the I/O devices 530 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 530 also include components for communicating over various networks, such as the Internet or intranet.

If the computer 500 is a PC, workstation, intelligent device or the like, the software in the memory 520 may further include a basic input output system (BIOS) (omitted for simplicity). The BIOS is a set of essential software routines that initialize and test hardware at start-up, start the O/S 550, and support the transfer of data among the hardware devices. The BIOS is stored in some type of read-only-memory, such as ROM, PROM, EPROM, EEPROM or the like, so that the BIOS can be executed when the computer 500 is activated.

When the computer 500 is in operation, the processor 510 is configured to execute software stored within the memory 520, to communicate data to and from the memory 520, and to generally control operations of the computer 500 pursuant to the software. The application 580 and the O/S 550 are read, in whole or in part, by the processor 510, perhaps buffered within the processor 510, and then executed.

When the application 580 is implemented in software it should be noted that the application 580 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 580 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The methods of Figs. 1-3, and the system of Fig. 4, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Fig. 5 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions, the architecture, functionality, and operation of possible implementations of systems, methods, and computer program products according to various embodiments of the present invention.

## Claims

1. A computer-implemented method (100) for replacing features of a data signal, the method comprising:
determining first features and second features (110) of a data signal;
processing the data signal to determine replacement features (120) based on the second features, wherein the replacement features are different to the second features; and
processing the data signal to generate a synthetic data signal (130) comprising a public portion and a hidden portion;
wherein the public portion comprises the first features and the replacement features; and
the hidden portion comprises reconstruction data based on the second features, wherein the hidden portion is transparently embedded within the synthetic data signal.

2. The computer-implemented method of claim 1, wherein the hidden portion is transparently embedded in the synthetic data signal using steganography.

3. The computer-implemented method of claim 1 or 2, wherein the second features comprise features corresponding to at least one of a subject's: background environment; emotional state; vital signs; health; personal information; and location.

4. The computer-implemented method of any of claims 1 to 3, wherein processing the data signal to generate a synthetic data signal comprises processing the data signal with a forward generator of a generative network (230).

5. The computer-implemented method of claim 4, further comprising: processing the synthetic data signal with a backward generator of the generative network to reconstruct the data signal (240).

6. The computer-implemented method of any of claims 1 to 5, wherein the data signal is encrypted prior to being processed.

7. The computer-implemented method of claim 6, wherein the encrypted data signal is structured in a first domain prior to being processed.

8. The computer-implemented method of any of claims 1 to 6, wherein the method further comprises: receiving first user input (205); and wherein determining at least one of the first and second features is based on the received first user input (210).

9. The computer-implemented method of any of claims 1 to 7, wherein the data signal comprises at least one of: a video signal; an audio signal; and a medical signal.

10. The computer-implemented method of any of claims 1 to 8, wherein the public portion further comprises marking data comprising an indicator.

11. The computer-implemented method of any of claims 1 to 9, further comprising: receiving second user input (215); and wherein determining replacement features is further based on the received second user input (220).

12. A computer-implemented method (300) for reconstructing a data signal from a synthetic data signal, wherein the synthetic data signal comprises a public portion and a hidden portion, wherein the public portion comprises first features of the data signal and replacement features based on second features of the data signal but different to the second features, and wherein the hidden portion is transparently embedded within the synthetic data signal and comprises reconstruction data based on the second features, the method comprising:
extracting the reconstruction data from the synthetic data signal (310); and
processing the synthetic data signal to reconstruct the data signal (320) based on the reconstruction data.

13. The computer-implemented method of claim 12, wherein processing the synthetic data signal comprises processing the synthetic data signal with a backward generator of a generative network.

14. A computer program comprising code means for implementing the computer-implemented method of any preceding claim when said program is run on a processing system.

15. A system (400) for replacing features of a data signal, the system comprising:
a processor (420) configured to:
determine first features and second features of a data signal;
process the data signal to determine replacement features based on the second features, wherein the replacement features are different to the second features; and
process the data signal to generate a synthetic data signal comprising a public portion and a hidden portion;
wherein the public portion comprises the first features and the replacement features; and
the hidden portion comprises reconstruction data based on the second features, wherein the hidden portion is transparently embedded within the synthetic data signal.
